# EUROPEAN PATENT SPECIFICATION

(11) **EP 1 773 480 B1**
(45) Date of publication and mention of the grant of the patent: **11.06.2008**
(21) Application number: 04763889.5
(22) Date of filing: 06.08.2004
(51) Int. Cl.: B01F 15/04, E03B 7/07

(54) **DOSING SYSTEM FOR DOSING OF A LIQUID ADDITIVE INTO A PRESSURIZED WATER SUPPLY LINE**
DOSIERSYSTEM ZUM HINZUDOSIEREN EINES FLÜSSIGEN ZUSATZSTOFFES IN EINE UNTER DRUCK STEHENDE WASSERZUFUHRLEITUNG
SYSTÈME DE DOSAGE D'UN ADDITIF LIQUIDE DANS UNE LIGNE D'ADDUCTION D'EAU SOUS PRESSION

(43) Date of publication of application: 18.04.2007
(73) Proprietor: ECOLAB, INC., St. Paul, MN 55102-1390 (US)
(72) Inventor: LOHWIESER, Heribert, 83313 Siegsdorf (DE); RUPPERT, Andreas, 83355 Grabenstätt (DE); MEYER, Bernhard, 40822 Mettmann (DE); DECKER, Michael, 42697 Solingen (DE)
(74) Representative: Gesthuysen, von Rohr & Eggert
(86) International application number: PCT/EP2004/008859
(87) International publication number: WO 2006/012916

(56) References cited:
- EP-A- 0 638 355
- DE-A1- 19 729 110
- US-A- 5 570 743

## Description

The present invention is related to a dosing system for dosing of a liquid additive into a pressurized water supply line and in particular to a dosing system with the features of the pre-characterizing part of claim 1.

A pressurized water supply line like a normal tap water supply poses a problem when a liquid additive shall be introduced into the flow of water in the supply line. Sometimes, however, it is intended to have the mixture of liquid additive with the water to be directed to an outlet like a water tap. This is used in particular circumstances, e.g. in centralized or decentralized cleaning systems, or, and in particular, in centralized or decentralized disinfecting systems.

Introducing a liquid additive into water flowing in a pressurized water supply line is normally done with an injector-system following the principle of a water jet pump. In a jet pump a jet of water accelerated in an orifice entrains the liquid additive, i.e. sucks it from a liquid additive supply, to deliver it at elevated pressure to the outlet. Such a dosing system is well known in practice (see technical handbook for "Topmater J 10" 05/95 published by Henkel Ecolab GmbH & Co. OHG, Düsseldorf, Germany). This prior art injector dosing system can be used as a decentralized system for automatic production of a ready to use solution of liquid additive in water. The concentrated liquid additive from a liquid additive supply is injected into the flow of water in the supply line so that at the outlet the substantially and sufficiently weakened solution of liquid additive in water is present in a ready to use state.

However, dosing systems with injector do not achieve a dosing accuracy sufficient for certain applications in particular in hospitals and other places where a precise concentration of the ready to use solution is mandatory. This is primarily due to the fact that the water pressure in a fresh water supply line varies as well as the flow characteristics of the water in the orifice. So it is virtually impossible to achieve a precisely proportional dosing of a liquid additive into a pressurized water supply line based on this principle. A further problem with an injector system is the tendency of the injector to calcify with a resulting further decrease in accuracy.

Whereas, in general, dosing systems as described can be applied for all kinds of cleaning, washing, rinsing or disinfectant agents, a preferred field of application of such dosing systems is the application of disinfectants (see the publication by the Federal Ministry of Health in its official publication (Bundesgesundheitsblatt, Vol. 1/2003, pages 72 to 95 with the listing of accepted liquid disinfectants).

A particular application of disinfecting agents is found with methods for disinfection of endoscopes. At present, disinfection of endoscopes is realized by treatment with ready-to-use disinfectant solutions or manually dosed concentrated disinfectants in an open tub. In the latter case high dosing accuracy is necessary to achieve the desired degree of safety with regard to microbicidal efficacy and material compatibility. Disadvantages of ready-to-use dilutions are expensive transport and storage of high amounts of liquids. In an open tub, it is possible to mechanically clean the endoscope using disinfecting liquid in the tub.

For disinfecting purposes, in particular for high quality disinfection in medicine as explained above for endoscopes, sometimes different disinfectant liquids have to be used, namely on the one hand, acid liquids, on the other hand, alkaline liquids. Those different liquids may be mixed in a tub as explained above, because they keep their characteristics for a sufficient time of about one day, which is ample time for achieving a perfect disinfecting result as well as for mechanically cleaning several endoscopes.

However, some of the acid liquid disinfectants are strongly de-gassing liquids emitting a highly unpleasant smell. In particular a peracetic acid, which is highly effective as a disinfectant in medicine, is only reluctantly used by personnel because of its awful smell in the concentrated solution.

De-gassing liquids cannot be dosed into a pressurized water supply line with injector technique, because the injector will strongly accelerate the formation of gas bubbles in the liquid additive.

However, a recent approach by the applicant of the present invention proposes a dosing system that uses a motorized positive-displacement forcing pump to force the liquid additive into the flow of water. In operation of the system the control unit controls the flow rate of the liquid additive under pressure and into the product discharge line based on the amount required by the flow rate of water in the water supply line that is continuously monitored by the control unit. If sensors and control unit are properly calibrated a high dosing accuracy can be achieved by this positive displacement method. In particular a strictly proportional dosing of the liquid additive into the flow of water may be achieved so that the final concentration of liquid additive in the water leaving the system at the outlet to be used by the persons working with this system is highly stable over time.

Of course, the motorized positive-displacement forcing pump as such usually delivers an at least slightly variable flow of liquid additive. However, in the product discharge line and a further line outside of the dosing system and attached to the product discharge connector the concentration of liquid additive in the water will equalize.

The above-mentioned prior art is the subject matter of an international patent application filed on January 13, 2004 as PCT/EP 2004/000156, attorney's reference 03.1462.

The use of a motorized positive-displacement forcing pump to add the liquid additive is much more suitable for de-gassing liquid additives than the injector systems of former prior art. However, a spontaneously de-gassing liquid additive still poses specific problems in application. So, the object of the present invention is to provide a dosing system for dosing of a liquid additive into a pressurized water supply line that still realizes a high accuracy that is particularly suitable for spontaneously de-gassing liquid as liquid additive.

The dosing system according to the invention solves the above-mentioned problem with the features according to claim 1. Preferred improvements and embodiments of the dosing system according to the present invention are the subject matter of the dependent claims.

In the liquid additive reservoir that is additionally provided for the liquid additive, the liquid additive pumped from the liquid additive supply can be allayed and de-gassing from the liquid additive can take place calmly. Gas formed in the liquid additive reservoir can be exhausted via the gas exhaust. As the liquid additive is pumped not directly from the liquid additive supply, but from the liquid additive reservoir and, preferably, from the bottom or near the bottom thereof over only a very short distance, the liquid additive is now practically free from gas bubbles, so that dosing accuracy is high even with a spontaneously de-gassing liquid additive.

Altogether, even for such kind of problematic liquid additive, in operation of the system, the system may achieve a proportional dosing of liquid additive into the flow of water. At the beginning of a dosing cycle, after a rest period of the dosing system, gas bubbles will have been formed within the line connecting the liquid additive reservoir with the feed pump and within the feed pump. However, due to the construction of the dosing system and due to the fact that the feed pump can be positioned adjacent to the liquid additive reservoir, the volume of de-gassing liquid additive within this part of the system can be reduced to a small amount. Thus, in the inventive dosing system, the accuracy is pretty high even for the first strokes of the system after a longer rest period.

In particular for applications in medicine, underdose of disinfectant must be safely avoided. Therefore, the dosing system may be provided with an additional feature, preferably realized within the electronic control unit that adds a fixed or variable amount of de-gassing liquid additive at the beginning of a dosing cycle after the dosing system has stood still for a longer period of time. Another possible approach would be to count the interval after the start of the dosing cycle until the additive flow controller for liquid additive confirms the flow of liquid additive. From this time interval, the control unit could calculate the missing amount of de-gassing liquid additive and could add this amount at the end of the dosing cycle.

Where the de-gassing liquid additive produces unpleasant, evil-smelling or even toxic gases, the invention provides the basis for a further modification in that a gas filtration unit is attached to the gas exhaust so that exhaust gas from the liquid additive reservoir passes through the filtration unit before reaching the atmosphere. The gas filtration unit will be equipped according to the type of exhaust gas to be filtered, in particular comprising an activated carbon trap for the exhaust gas. Evil-smelling gas from the spontaneously de-gassing liquid additive, in particular from a peracetic acid disinfectant, will be completely removed. So, the personnel will be better motivated to use the most suitable disinfectant liquid irrespective of possible evil-smelling gases.

Subject of the present invention is also the use of a dosing system according to claim 11.

Now, details and advantages of the invention are explained together with the explanation of preferred embodiments of the invention with reference to the accompanying drawings. In the drawings shows
- Fig. 1: a schematic representation of a dosing system according to a first embodiment of the invention,
- Fig. 2: a schematic representation, however, only a separate detail thereof, of a second embodiment of the invention,
- Fig. 3: a front view of a third embodiment of the invention.

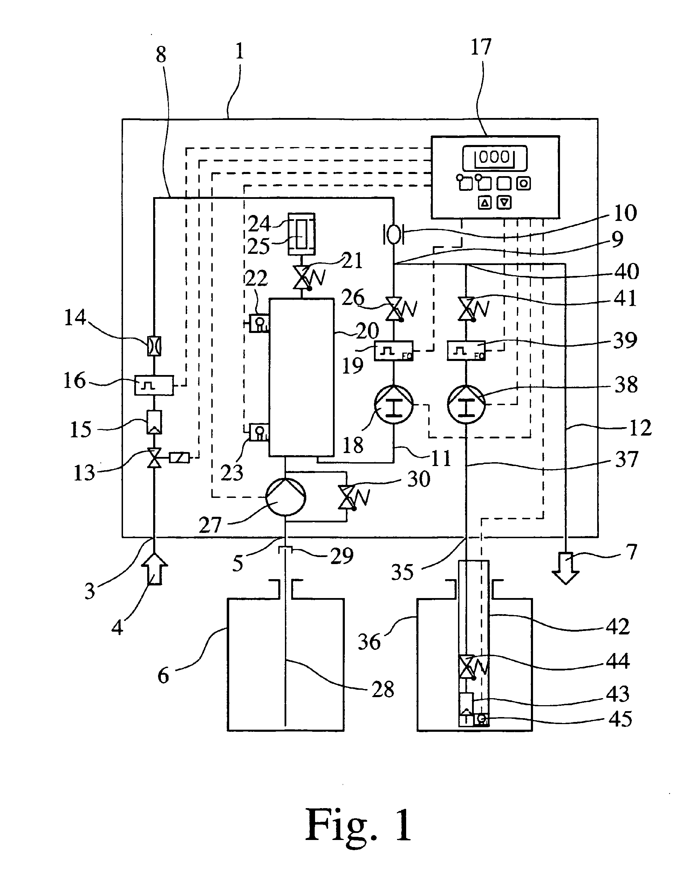

Fig. 1 shows, in a kind of block diagram, a dosing system according to a preferred embodiment of the invention. This block diagram is basically similar to the block diagram in Fig. 1 of the prior art PCT application PCT/EP 2004/000156.

The dosing system is intended for dosing of a liquid additive into a pressurized water supply line. Fig. 1 indicates housing 1. This dosing system comprises a water tap connector 3 for connecting the dosing system to a pressurized water supply 4 indicated in general by an arrow. Further provided is a liquid additive connector 5 for connecting the dosing system to a liquid additive supply 6 indicated schematically in Fig. 1 as an exchangeable plastics container. Further provided is a product discharge connector 7 for discharging the pressurized mixture of liquid additive and water to at least one outlet, wherein this outlet can be the product discharge connector 7 as such or, preferably, an outlet tap or other armature connected to the product discharge connector 7 by a conduit or conduit-system.

Within the dosing system a water supply line 8 is leading from the tap connector 3 to a junction point 9 with a backflow preventer 10 therein. Such backflow preventer 10 prevents any flow of liquid backwards from the liquid additive connector 5 towards the water tap connector 3. In particular, the backflow preventer 10 prevents any flow of any liquid into the supply of water from any other than its intended source, namely the water supply 4. This is a safety mechanism necessary to keep any liquid additive out of the original water supply 4.

Further, an additive supply line 11 is leading from the additive connector 5 to the junction point 9. Finally, a product discharge line 12 is leading from the junction point 9 to the product discharge connector 7.

A control element 13 in the form of a solenoid valve (magnet valve) within the water supply line 8 is positioned to control, in operation of the system, the flow of water in the water supply line 8 towards the junction point 9 by means of its on/off-function. Adjustment of the flow cross section in the control element 13 may be possible by means of an adjustment element attached to the control element 13.

Downstream of the control element 13 in the water supply line 8 a water flow regulator 14 is provided, whereas a filtering means 15 is provided between the water flow regulator 14 and the control element 13. Downstream of the filtering means 15, a water flow meter 16 is provided, which is used to check the volume flow of water in the water supply line 8. In fact, there may be different types of water flow meters used, namely a usual incremental water meter and a mechanical flow meter as a back up control element.

An electronic control unit 17 is provided for controlling the operation of the dosing system in total. The control unit 17 is only schematically indicated.

Now, in the dosing system according to the invention a motorized positive-displacement forcing pump 18 is positioned within the additive supply line 11 upstream of the junction point 9. The pump 18 in the present embodiment of the invention is a double stroke piston pump. A piston pump is suitable for the present application because it allows a precise volumetric dosing, in particular in combination with a digital linear electric motor that realizes small steps. A double stroke piston pump has two active volumes for back and forth movement of the piston. Other possibilities for suitable pumps 18 will be described below.

An additive flow controller 19 is positioned within the additive supply line 11 downstream of the pump 18. An additive flow controller 19 is a suitable device in particular in combination with a piston pump as positive-displacement forcing pump 18, because dosing accuracy is provided by the piston pump 18 and the additive flow controller 19 needs only to check that a flow of liquid additive is present. When other types of positive-displacement forcing pumps 18 are used that provide a lower dosing accuracy, an additive flow meter instead of an additive flow controller may be provided. This is more expensive than a simple controller. The additive flow meter can be a mechanical flow meter like an oval wheel meter. However, other kinds of volume flow meters can be used as well.

As in the prior art system a safety transformer (230 V; 110 V / 24 V) may connect the system, in particular the control unit 17, with mains. A back up battery may be provided within the housing 1.

In operation of the system the control unit 17 controls the flow rate of the additive to the amount required by the flow rate of the water in the water supply line 8 as measured by the water-flow meter 16 by controlling the operation of the pump 18, namely the operating speed of the pump 18. With this system it is possible to achieve a highly accurate dosing of liquid additive from the liquid additive supply 6 into the water as flowing in the water supply line 8 towards the product discharge outlet. In particular it is possible that in operation of the system this system achieves a reasonably proportional dosing of liquid additive into the flow of water.

As explained above a preferred application of the dosing system according to the invention is for a disinfectant as a liquid additive. In particular in hospitals or other places where accuracy is required for this kind of in-line production of a mixture of additive and water.

Now, in the preferred embodiment according to Fig. 1 a liquid additive reservoir 20 is positioned within the additive supply line 11 upstream of the feed pump 18 and the liquid additive reservoir 20 is provided with a gas exhaust 21. In operation, liquid additive is delivered from the liquid additive supply 6 to the liquid additive reservoir 20 filling the liquid additive reservoir 20 up to a certain level enabling de-gassing of the liquid additive through the gas exhaust 21. For dosing, the liquid additive is pumped by means of the feed pump 18 from the liquid additive reservoir 20 to the junction point 9. As explained above, in the present embodiment, the liquid additive in the liquid additive reservoir 20 is pumped from the bottom of the liquid additive reservoir 20 towards the junction point 9, so that it is highly likely that the liquid additive contains no gas bubbles, so that dosing is highly accurate at junction point 9.

The liquid additive reservoir 20 allows settling of the liquid additive with a free liquid level enabling sufficient de-gassing of the liquid additive through the gas exhaust 21. So, the present dosing system is particularly suitable for a liquid additive that is a spontaneously de-gassing liquid.

In the present embodiment, the feed pump 18 is positioned adjacent to the liquid additive reservoir 20 so that the length of the line connecting the liquid additive reservoir 20 with the feed pump 18 is reasonably short. This has the advantages already explained in the introductory part of the description with regard to the formation of gas bubbles after a longer rest period of the dosing system.

In the present embodiment, it may be particularly suitable that the de-gassing liquid additive is a disinfectant. For application in medicine, in particular for the disinfection of endoscopes, the de-gassing liquid additive may preferably be an organic peroxoacid or in particular peracetic acid or, in other circumstances, even inorganic peroxo compounds.

However, the system may be applied for other liquid additives, as well, that are described in the prior art incorporated into the present application by reference.

Whereas the pressurized mixture of additive and water may be a suspension of additive in water a preferred solution is to use a liquid additive that is watersoluble.

Now, as for the feed pump 18, there are different possibilities for the driving motor as well as for the construction of the pump 18 (see PCT/EP 2004/000156). In general it is possible to use any kind of positive displacement pump. In the above-explained embodiment of Fig. 1, the pump 18 is a double stroke piston pump. This is particularly suitable as far as dosing accuracy is concerned. This has been explained in detail above. Further, due to the dosing accuracy of a piston pump, the flow of liquid additive has to be controlled only, but no expensive additive flow meter is necessary.

An alternative to a piston pump may be a rotary-vane pump. However, sometimes the liquid additive will be chemically aggressive. Chemically aggressive liquid additives may damage the ceiling elements necessary in piston pumps or rotary-vane pumps. For chemically aggressive liquid additives, a diaphragm pump may be a preferable choice for the feed pump 18. However, dosing accuracy of a diaphragm pump is not as good as dosing accuracy of a piston pump. So, for a diaphragm pump, a liquid additive flow meter for precise flow control of the liquid additive may have to be used.

As a single action pump, the pump 18 works with only one chamber. So, alternating suction and discharge strokes will occur. This leads to an intermittent delivery of liquid additive to the junction point 9. An intermittent delivery of liquid additive to the junction point 9 means that the mixture of liquid additive and water flowing in the product discharge line 12 towards the product discharge connector 7 and the discharge outlet may have a very stable liquid additive concentration on the average that still shows a rather high fluctuation. This problem is partly solved if the pump 18 is a double-chamber pump with phase-shifted operation of the two chambers.

Now, in the present embodiment as shown in Fig. 1, the liquid additive reservoir 20 is provided with level gauges 22, 23 for high level and low level and, in operation of the system, the level of liquid additive in the reservoir 20 is controlled to not substantially exceed the high level and to not fall substantially below the low level. The two level gauges 22, 23 give the input signals to the control unit 17 to control the system so that the level of liquid additive in the liquid additive reservoir 20 is always high enough to supply a gas-free liquid to the feed pump 18. As soon as the low level gauge 23 gives a signal to the control unit 17, liquid additive is fed to the liquid additive reservoir 20 until the high level gauge 22 gives a corresponding signal. If the high level gauge 22 gives no signal after a specified time period, this simultaneously indicates that, obviously, the liquid additive supply 6 is empty. So, no specific level indicator in the liquid additive supply 6, as such, is necessary.

The level gauges 22, 23 in the present embodiment are capacitive sensors. However, in practice, an alternative lies with level gauges 22, 23 designed as a liquid level switch. A third level gauge as an excess level indicator could be used as a backup for the high level gauge and for emergency shutdown of the system.

In order to remove evil-smelling gases in the present embodiment, a gas filtration unit 24 is attached to the gas exhaust 21 so that exhaust gas from the liquid additive reservoir 20 passes through the filtration unit 24 before reaching the atmosphere. Here, the gas filtration unit 24 comprises an activated carbon trap 25 for exhaust gas. In practice, even a highly evil-smelling peracetic acid disinfectant may be used, because the smell of the peracetic acid product is prevented from reaching the atmosphere because of the activated carbon trap 25 in the gas filtration unit 24. Further, a non-return valve 26 prevents back-flow of water into the additive supply line 11. The gas exhaust 21 may be simply an opening leading to the filtration unit 24 if a filtration unit 24 is present. However, instead of a simple opening, the gas exhaust 21 may be equipped with a gas exhaust valve, which is normally a non-return valve as indicated in Fig. 1 of the drawings.

In the present embodiment, it is provided that the liquid additive supply 6 is positioned below the liquid additive reservoir 20 and a supply pump 27 is positioned between the liquid additive reservoir 20 and the liquid additive supply 6 and in operation of the system, liquid additive is pumped from the liquid additive supply 6 to the liquid additive reservoir 20, preferably discontinuously following indications of the level gauges 22, 23. In Fig. 1, it is specified that a suction lance 28 extends into the liquid additive supply 6 indicated as a replaceable container. In order to prevent evil-smelling gases from leaving the liquid additive supply 6, a specific gas-tight tap 29 is positioned on top of the container. This gas-tight connection means that usual suction lances with level indicators cannot be used. So, the liquid additive reservoir 20 with its level gauges 22, 23 has a second advantage in that it eliminates the necessity to check the level within the liquid additive supply 6, as such. This has been explained before.

In Fig. 1, the liquid additive supply 6 is positioned below the housing 1 and the liquid additive is pumped by means of the supply pump 27 from the liquid additive supply 6 upwards to the liquid additive reservoir 20. Positioning of the container with the liquid additive below the housing 1 is convenient and corresponds to the usual construction of such dosing system. However, such positioning needs a separate supply pump 27. In order to allow de-gassing of the liquid additive from the liquid additive supply 6, the supply pump 27 may be provided with a one-way bypass valve 30 allowing exhaust gas from the liquid additive supply 6 to bypass the supply pump 27 and to reach the liquid additive reservoir 20 from where it is, then leaving via the gas exhaust 21. However, in practice, a pressure relief membrane in the liquid additive supply 6, which is frequently used, may be sufficient for equalizing the pressure in the liquid additive supply 6. Then, the additional bypass valve 30 is not necessary.

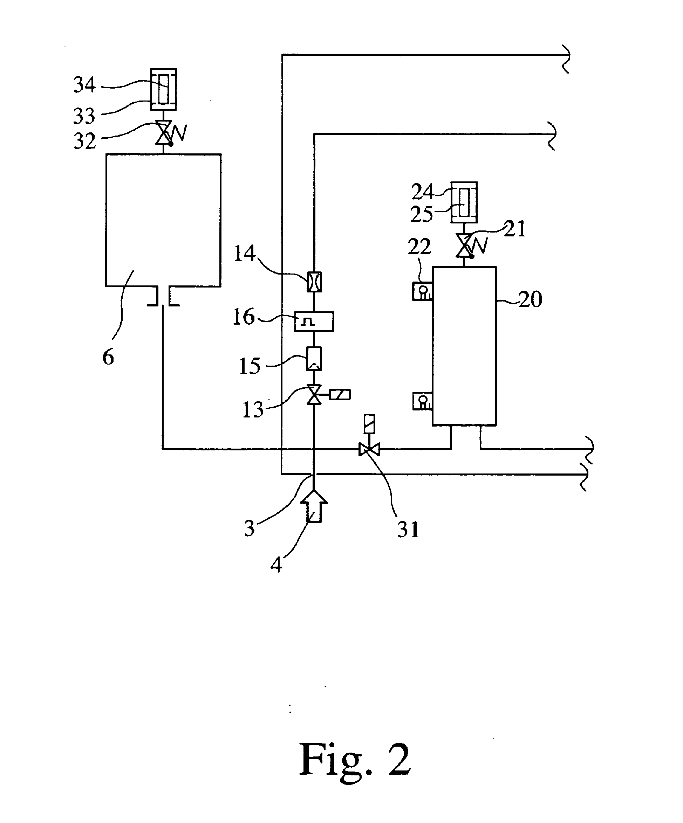

In the embodiment of Fig. 2, a different construction is used where the liquid additive supply 6 is positioned above the liquid additive reservoir 20 with a flow control element 31 positioned therebetween. In operation of the system, liquid additive is gravity-fed from the liquid additive supply 6 to the liquid additive reservoir 20, controlled by the flow control element 31. The flow control element 31 is controlled by the control unit 17, again using the signals from the level gauges 22, 23 as explained before. However, by gravity feeding the liquid additive, not only a supply pump 27 can be eliminated, but also a suction lance 28 is not necessary here.

Spontaneous de-gassing of the liquid additive in the liquid additive supply 6 may form a problem here. In order to deal with this problem, Fig. 2 shows that the liquid additive supply 6 is provided with a gas exhaust 32 enabling de-gassing of the liquid additive in the liquid additive supply 6 through the gas exhaust 32. A gas filtration unit 33 is attached to the gas exhaust 32 so that exhaust gas from the liquid additive supply 6 passes through the gas filtration unit 33 before reaching the atmosphere. Again, here, it is provided that the gas filtration unit 33 comprises an activated carbon trap 34 for exhaust gas.

It has been explained before that, under specific circumstances, it would be helpful to be able to use more than one liquid additive, in particular two liquid additives of different properties. This is particularly true in medicine and, in particular, for disinfection of endoscopes as explained above. By this automatic, simultaneous dosing, it will be possible to abandon the prior art manual mixing of different liquid disinfectants in an open tub.

Now, in order to achieve this further object in this embodiment, there is provided a second liquid additive connector 35 for connecting the dosing system to a second liquid additive supply 36, a second additive supply line 37 leading from the second liquid additive connector 35 to the junction point 9 or a second junction point 40, a second motorized feed pump 38 that is positioned within the second additive supply line 37 upstream of the junction point 9 or second junction point 40, and a second additive flow controller or flow meter 39 that is positioned within the second additive supply line 37 preferably downstream of the second feed pump 38. In operation of the system, the control unit 17 controls the flow rate of the first and the second liquid additive to the amount required by the mixing quota of the additives and the flow rate of water by controlling the operation of the feed pumps 18, 38. Downstream of the additive flow controller or flow meter 39 is provided a non-return valve 41 to prevent backflow of water from the water supply line 8 into the additive supply line 37.

The second liquid additive circuit comprises a more traditional construction of the supply. The second liquid additive supply 36 is provided in the form of an exchangeable container. However, if the second liquid additive should be a de-gassing liquid, as well, a similar construction as with the first liquid additive supply explained above can be used.

The second liquid additive supply 36 is connected to the second liquid additive connector 35 by means of a suction lance 42. The suction lance 42 is provided with an intake filter 43, a non-return valve 44 and at least one liquid level sensor 45, which is connected to the control unit 17.

Finally, as Fig. 1 shows, it is desirable that a housing 1 is provided enclosing the complete dosing system with the exception of suction lances and associated control elements (if existing) so that the dosing system can be handled as a unit. In general it is possible to provide a compartment within the housing 1 to house the container or containers, too. However, for ease of replacement of the container or containers, an external position of the container or containers might be preferable.

The housing 1 can be placed wherever it is convenient, usually next to the water supply 4.

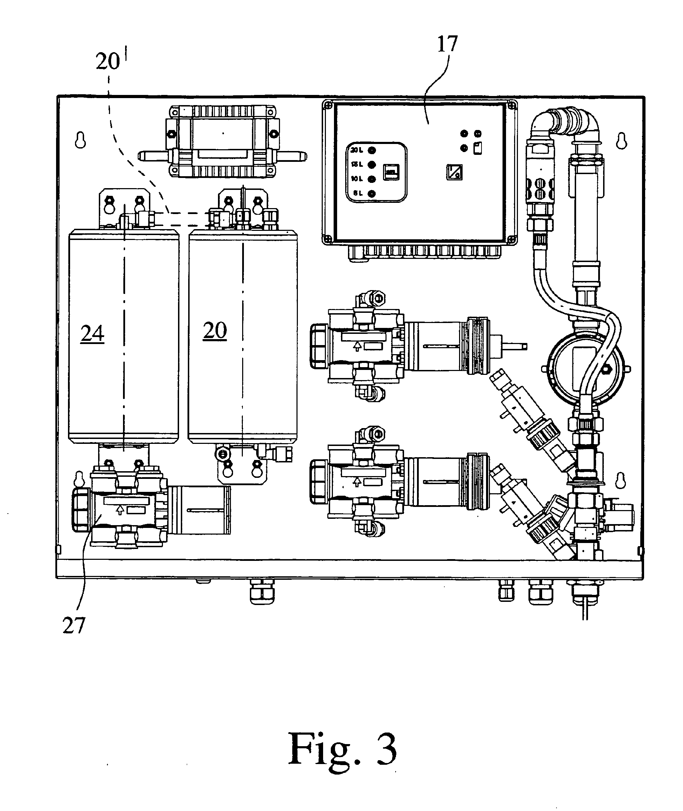

Fig. 3 of the drawings shows a front view of a dosing system according to a third embodiment of the invention. This dosing system is basically constructed in the same way as the dosing system according to Fig. 1. However, whereas in Fig. 1 the gas filtration unit 24 is positioned above the liquid additive reservoir 20, in the embodiment of Fig. 3, the gas filtration unit 24 is positioned at the side of the liquid additive reservoir 20. The connection of the gas filtration unit 24 with the liquid additive reservoir 20 is done with a connecting line 20' at the top of both containers. The activated carbon trap 25 is positioned as a cartridge within the gas filtration unit 24 and the gas exhaust 21 is, here, positioned at the bottom of the container forming the gas filtration unit 24.

It has been considered to provide two gas filtration units in parallel to each other and to operate those alternatively, preferably in an active and in a backwash mode. Such system would need a switchover unit. However, in practice, it has been revealed that the amount of activated carbon necessary for a one-year cycle of the dosing system is so small that the efforts and costs of a second gas filtration unit and a switchover unit is not normally warranted.

In the preferred embodiment with the application of the dosing system in medicine, in particular for disinfection of endoscopes, it is provided that the second liquid additive is a disinfectant or an activator for a disinfectant, preferably a soda-lye or a soda-lye based activator liquid.

So, as a combination, the first liquid additive from the liquid additive supply 6 is preferably a peracetic acid, whereas the liquid additive from the second liquid additive supply 36 is preferably a soda-lye based activator liquid.

The peracetic acid product can be dosed free of gas, the smell of the peracetic acid product is not allowed to reach the atmosphere by use of activated carbon as a filtering means. Safety devices for detection of leakage and defective components are provided in the system.

The additive flow controllers 19, 39 (or flow meters) form safety elements that allow the control unit 17 to stop the system as soon as any defect at the pumps 18, 38, the suction lances 28, 42, the driving motors etc. is detected. Likewise, the water flow meter 16 forms a safety element that leads to a shutdown of the dosing system if the water flow falls below a preset value. This feature guarantees that the concentration of the final solution will not be substantially changed.

The liquid level sensor 45 in the container 36 triggers a shut-off as soon as the lower safety level of liquid additive in the container 36 is reached. Of course, two levels may be used, one for a warning in the display of the control unit 17, the second for an off signal to the control unit 17. The same is to be said for the indirect level control by means of the gauges 22, 23 at the liquid additive reservoir 20 for the de-gassing additive from container 6.

The backflow preventer 10 used in the present system may be constructed following the German statutes DIN 1988 and DIN EN 1717:2000.

## Claims

1. Dosing system for dosing of a liquid additive into a pressurized water supply line, comprising:
a water tap connector (3) for connecting the dosing system to a pressurized water supply (4),
a liquid additive supply (6);
a liquid additive connector (5) for connecting the dosing system to the liquid additive supply (6);
a product discharge (7) for discharging the pressurized mixture of additive and water;
a water supply line (8) leading from the tap connector (3) to a junction point (9) preferably with a backflow preventer (10) therein;
an additive supply line (11) leading from the additive connector (5) to the junction point (9);
a product discharge line (12) leading from the junction point (9) to the product discharge (7);
a motorized feed pump (18) that is positioned within the additive supply line (11) upstream of the junction point (9);
an additive flow controller or flow meter (19) that is positioned within the additive supply line (11) preferably downstream of the feed pump (18);
a water-flow meter (16) that is positioned within the water supply line (8) preferably upstream of the backflow preventer (10); and
an electronic control unit (17) for controlling the operation of the dosing system, wherein, in operation of the system, the control unit (17) controls the flow rate of the additive to the amount required by the flow rate of water by controlling the operation of the feed pump (18),
**characterized in that**
in order to use the dosing the system for dosing of a spontaneously de-gassing liquid additive,
a liquid additive reservoir (20) is positioned within the additive supply line (11) upstream of the feed pump (18); and
the liquid additive reservoir (20) is provided with a gas exhaust (21),
in operation, liquid additive is delivered from the liquid additive supply (6) to the liquid additive reservoir (20) filling the liquid additive reservoir (20) up to a certain level enabling de-gassing of the liquid additive through the gas exhaust (21), and
for dosing, the liquid additive is pumped by means of the feed pump (18) from the liquid additive reservoir (20), preferably from the bottom or near the bottom thereof, to the junction point (9).

2. Dosing system according to claim 1, **characterized in that**
the feed pump (18) is positioned adjacent to the liquid additive reservoir (20).

3. Dosing system according to claim 1 or 2, **characterized in that**
the liquid additive reservoir (20) is provided with level gauges (22, 23) for high level and low level and
in operation of the system, the level of liquid additive in the reservoir (20) is controlled to not substantially exceed the high level and to not fall substantially below the low level.

4. Dosing system according to any one of the preceding claims, **characterized**
**in that**
a gas filtration unit (24) is attached to the gas exhaust (21) so that exhaust gas from the liquid additive reservoir (20) passes through the filtration unit (24) before reaching the atmosphere,
wherein, preferably, the gas filtration unit (24) comprises an activated carbon trap (25) for exhaust gas and/or the gas filtration unit (24) is positioned above or, preferably, at the side of the liquid additive reservoir (20).

5. Dosing system according to any one of the preceding claims, **characterized in that**
the liquid additive supply (6) is positioned below the liquid additive reservoir (20) and
a supply pump (27) is positioned between the liquid additive reservoir (20) and the liquid additive supply (6) and
in operation of the system, liquid additive is pumped from the liquid additive supply (6) to the liquid additive reservoir (20), preferably discontinuously following indications of the level gauges (22, 23),
wherein, preferably, the supply pump (27) is provided with a one-way bypass valve (30) for exhaust gas from the liquid additive supply (6).

6. Dosing system according to any one of the claims 1 to 4, **characterized in that**
the liquid additive supply (6) is positioned above the liquid additive reservoir (20) with a flow control element (31) positioned therebetween and
in operation of the system, liquid additive is gravity-fed from the liquid additive supply (6) to the liquid additive reservoir (20), controlled by a flow control element (31),
wherein, preferably, the liquid additive supply (6) is provided with a gas exhaust (32) enabling de-gassing of the liquid additive in the liquid additive supply (6) through the gas exhaust (32) and a gas filtration unit (33) is attached to the gas exhaust (32) so that exhaust gas from the liquid additive supply (6) passes through the filtration unit (33) before reaching the atmosphere, wherein, further preferably, the gas filtration unit (33) comprises an activated carbon trap (34) for exhaust gas.

7. Dosing system according to any one of the preceding claims, **characterized in that**
there is provided
a second liquid additive connector (35) for connecting the dosing system to a second liquid additive supply (36),
a second additive supply line (37) leading from the second liquid additive connector (35) to the junction point (9) or a second junction point (40),
a second motorized feed pump (38) that is positioned within the second additive supply line (37) upstream of the junction point (9) or second junction point (40),
a second additive flow controller or flow meter (39) that is positioned within the second additive supply line (37) preferably downstream of the second feed pump (38),
wherein in operation of the system, the control unit (17) controls the flow rate of the first and the second liquid additive to the amount required by the mixing quota of the additives and the flow rate of water by controlling the operation of the feed pumps (18, 38).

8. Dosing system according to any one of the preceding claims, **characterized in that**
the feed pump (18; 38) is a positive displacement forcing pump, preferably a piston pump, most preferably a double stroke piston pump, and/or
the gas exhaust (21; 32) is provided with a gas exhaust valve, preferably a non-return valve.

9. Dosing system according to any one of the preceding claims, **characterized in that** in use the liquid additive is a de-gassing disinfectant,
wherein, preferably, the de-gassing liquid additive is an organic peroxoacid or, in particular, peracetic acid, or the de-gassing liquid additive is an inorganic peroxo compound, or in particular, a hydrogen peroxide.

10. Dosing system according to claim 7 **characterized in that**
the second liquid additive is a disinfectant or an activator for a disinfectant, preferably a soda-lye or a soda-lye based activator liquid.

11. Use of a dosing system according to any one of claims 1 to 10 for dosage of a disinfectant according to any one of the claims 9 or 10.

## Patentansprüche

1. Dosiersystem zum Dosieren eines Flüssigadditivs in eine Druckwasserversorgungsleitung, das Folgendes umfasst:
einen Wasserhahnverbinder (3) zur Verbindung des Dosiersystems mit einer Druckwasserversorgung (4), eine Flüssigadditivversorgung (6),
einen Flüssigadditivverbinder (5) zur Verbindung des Dosiersystems mit der Flüssigadditivversorgung (6),
einen Produktaustrag (7) zum Austragen des druckbeaufschlagten Gemisches aus Additiv und Wasser,
eine Wasserversorgungsleitung (8), die vom Hahnverbinder (3) zu einer Verbindungsstelle (9), vorzugsweise mit einer Rückflusssperre (10) darin, führt,
eine Additivversorgungsleitung (11), die vom Additivverbinder (5) zur Verbindungsstelle (9) führt,
eine Produktaustragsleitung (12), die von der Verbindungsstelle (9) zum Produktaustrag (7) führt,
eine motorisierte Förderpumpe (18), die in der Additivversorgungsleitung (11) stromaufwärts der Verbindungsstelle (9) positioniert ist,
einen Additivdurchflussregler oder -durchflussmesser (19), der in der Additivversorgungsleitung (11), vorzugsweise stromabwärts der Pumpe (18), positioniert ist,
einen Wasserflussmesser (16), der in der Wasserversorgungsleitung (8), vorzugsweise stromaufwärts der Rückflusssperre (10), positioniert ist, und
eine elektronische Steuereinheit (17) zum Steuern des Betriebs des Dosiersystems, wobei die Steuereinheit (17) im Betrieb des Systems durch Steuerung des Betriebs der Förderpumpe (18) den Durchfluss des Additivs auf die von dem Wasserdurchfluss erforderte Menge steuert,
**dadurch gekennzeichnet, dass**
zur Verwendung des Dosiersystems zum Dosieren eines spontan entgasenden Flüssigadditivs ein Flüssigadditivbehältnis (20) in der Additivversorgungsleitung (11) stromaufwärts der Förderpumpe (18) positioniert ist, und
das Flüssigadditivbehältnis (20) mit einem Gasauslass (21) versehen ist,
das Flüssigadditiv im Betrieb von der Flüssigadditivversorgung (6) zum Flüssigadditivbehältnis (20) geleitet wird und das Flüssigadditivbehältnis (20) bis zu einer bestimmten Höhe füllt, wodurch eine Entgasung des Flüssigadditivs durch den Gasauslass (21) ermöglicht wird, und
das Flüssigadditiv zum Dosieren mittels der Förderpumpe (18) von dem Flüssigadditivbehältnis (20), vorzugsweise von seinem Boden oder von nahe seinem Boden, zur Verbindungsstelle (9) gepumpt wird.

2. Dosiersystem nach Anspruch 1, **dadurch gekennzeichnet, dass**
die Förderpumpe (18) neben dem Flüssigadditivbehältnis (20) positioniert ist.

3. Dosiersystem nach Anspruch 1 oder 2, **dadurch gekennzeichnet, dass**
das Flüssigadditivbehältnis (20) mit Pegelmessern (22, 23) für hohen und niedrigen Pegel versehen ist, und
im Betrieb des Systems der Pegel des Flüssigadditivs im Behältnis (20) so gesteuert wird, dass er den hohen Pegel nicht wesentlich übersteigt und nicht wesentlich unter den niedrigen Pegel fällt.

4. Dosiersystem nach einem der vorhergehenden Ansprüche, **dadurch gekennzeichnet, dass**
eine Gasfiltrationseinheit (24) am Gasauslass (21) befestigt ist, so dass Abgas vom Flüssigadditivbehältnis (20) durch die Filtrationseinheit (24) strömt, bevor es die Atmosphäre erreicht,
wobei die Gasfiltrationseinheit (24) eine Aktivkohlefalle (25) für Abgas umfasst und/oder die Gasfiltrationseinheit (24) über oder vorzugsweise neben dem Flüssigadditivbehältnis (20) positioniert ist.

5. Dosiersystem nach einem der vorhergehenden Ansprüche, **dadurch gekennzeichnet, dass**
die Flüssigadditivversorgung (6) unter dem Flüssigadditivbehältnis (20) positioniert ist und eine Versorgungspumpe (27) zwischen dem Flüssigadditivbehältnis (20) und der Flüssigadditivversorgung (6) positioniert ist, und im Betrieb des Systems Flüssigadditiv nach Anzeige der Flüssigkeitspegel (22, 23) vorzugsweise intermittierend von der Flüssigadditivversorgung (6) zum Flüssigadditivbehältnis (20) gepumpt wird, wobei die Versorgungspumpe (27) vorzugsweise mit einem Einwegeumgehungsventil (30) für Abgas aus der Flüssigadditivversorgung (6) versehen ist.

6. Dosiersystem nach einem der Ansprüche 1 bis 4,
**dadurch gekennzeichnet, dass**
die Flüssigadditivversorgung (6) über dem Flüssigadditivbehältnis (20) mit einem dazwischen positionierten Flusssteuerelement (31) positioniert ist, und
im Betrieb des Systems das Flüssigadditiv unter Steuerung des Flusssteuerelements (31) durch Schwerkraft von der Flüssigadditivversorgung (6) zum Flüssigadditivbehältnis (20) geleitet wird,
wobei die Flüssigadditivversorgung (6) vorzugsweise mit einem Gasauslass (32) versehen ist, der eine Entgasung des Flüssigadditivs in der Flüssigadditivversorgung (6) durch den Gasauslass (32) ermöglicht, und eine Gasfiltrationseinheit (33) am Gasauslass (32) befestigt ist, so dass Abgas aus der Flüssigadditivversorgung (6) durch die Filtrationseinheit (33) strömt, bevor es die Atmosphäre erreicht, wobei die Gasfiltrationseinheit (33) des Weiteren vorzugsweise eine Aktivkohlefalle (34) für Abgas umfasst.

7. Dosiersystem nach einem der vorhergehenden Ansprüche, **dadurch gekennzeichnet, dass** Folgendes vorgesehen ist:
ein zweiter Flüssigadditivverbinder (35) zur Verbindung des Dosiersystems mit einer zweiten Flüssigadditivversorgung (36),
eine zweite Additivversorgungsleitung (37), die vom zweiten Flüssigadditivverbinder (35) zur Verbindungsstelle (9) oder zu einer zweiten Verbindungsstelle (40) führt,
eine zweite motorisierte Förderpumpe (38), die in der zweiten Additivversorgungsleitung (37) stromaufwärts der Verbindungsstelle (9) oder der zweiten Verbindungsstelle (40) positioniert ist,
eine zweite Additivflussteuerung oder einen Additivdurchflussmesser (39), die bzw. der in der zweiten Additivversorgungsleitung (37), vorzugsweise stromabwärts der zweiten Förderpumpe (38), positioniert ist,
wobei die Steuereinheit (17) im Betrieb des Systems den Durchfluss des ersten und des zweiten Flüssigadditivs auf die von dem Mischanteil der Additive erforderte Menge und den Wasserdurchfluss durch Steuerung des Betriebs der Förderpumpen (18, 38) steuert.

8. Dosiersystem nach einem der vorhergehenden Ansprüche, **dadurch gekennzeichnet, dass**
die Förderpumpe (18; 38) eine Verdränger-Druckpumpe, vorzugsweise eine Kolbenpumpe, besonders bevorzugt eine Doppelhubkolbenpumpe, ist und/oder das Abgas (21; 32) mit einem Gasauslassventil, vorzugsweise einem Rückschlagventil, versehen ist.

9. Dosiersystem nach einem der vorhergehenden Ansprüche, **dadurch gekennzeichnet, dass**
das Flüssigadditiv im Gebrauch ein entgasendes Desinfektionsmittel ist,
wobei das entgasende Flüssigadditiv eine organische Peroxosäure oder insbesondere eine Peressigsäure ist oder das entgasende Flüssigadditiv eine anorganische Peroxoverbindung oder insbesondere ein Wasserstoffperoxid ist.

10. Dosiersystem nach Anspruch 7, **dadurch gekennzeichnet, dass**
das zweite Flüssigadditiv ein Desinfektionsmittel oder ein Aktivator für ein Desinfektionsmittel, vorzugsweise eine Natronlauge oder eine Aktivatorflüssigkeit auf Natronlaugenbasis, ist.

11. Verwendung eines Dosiersystems nach einem der Ansprüche 1 bis 10 zur Dosierung eines Desinfektionsmittels nach Anspruch 9 oder 10.

## Revendications

1. Système de dosage destiné à doser un additif liquide dans une canalisation d'alimentation en eau sous pression, comportant :
un raccord (3) pour robinet d'eau destiné à raccorder le système de dosage à une alimentation (4) d'eau sous pression ;
une alimentation (6) en additif liquide ;
un raccord (5) d'additif liquide destiné à raccorder le système de dosage à l'alimentation (6) en additif liquide ;
une évacuation (7) de produit destinée à évacuer le mélange sous pression d'additif et d'eau ;
une canalisation (8) d'alimentation en eau allant du raccord (3) pour robinet d'eau à un point (9) de jonction et comprenant de préférence un dispositif anti-retour (10) ;
une canalisation (11) d'alimentation en additif allant du raccord (5) d'additif au point (9) de jonction ;
une canalisation (12) d'évacuation du produit allant du point (9) de jonction à l'évacuation (7) de produit ;
une pompe (18) d'alimentation motorisée, positionnée sur la canalisation (11) d'alimentation en additif en amont du point (9) de jonction ;
un contrôleur de circulation ou un débitmètre (19) d'additif positionné sur la canalisation (11) d'alimentation en additif, de préférence en aval de la pompe (18) d'alimentation ;
un débitmètre (16) d'eau positionné sur la canalisation (8) d'alimentation en eau, de préférence en amont du dispositif anti-retour (10) ; et
une unité (17) de commande électronique destinée à commander le fonctionnement du système de dosage, l'unité (17) de commande régulant, pendant le fonctionnement du système, le débit de l'additif à la quantité nécessitée par le débit de l'eau en régulant le fonctionnement de la pompe (18) d'alimentation,
**caractérisé en ce que**,
afin d'utiliser le système de dosage pour doser un additif liquide à dégazage spontané,
un réservoir (20) pour additif liquide est positionné sur la canalisation (11) d'alimentation en additif en amont de la pompe (18) d'alimentation ; et
le réservoir (20) pour additif liquide est pourvu d'un échappement (21) de gaz ;
en fonctionnement, de l'additif liquide est amené de l'alimentation (6) en additif liquide au réservoir (20) pour additif liquide, remplissant le réservoir (20) pour additif liquide jusqu'à un certain niveau permettant le dégazage de l'additif liquide à travers l'échappement (21) de gaz, et
en vue du dosage, l'additif liquide est pompé au moyen de la pompe (18) d'alimentation du réservoir (20) pour additif liquide, de préférence du fond ou du voisinage du fond de celui-ci, au point (9) de jonction.

2. Système de dosage selon la revendication 1, **caractérisé en ce que** la pompe (18) d'alimentation est positionnée au voisinage du réservoir (20) pour additif liquide.

3. Système de dosage selon la revendication 1 ou 2,
**caractérisé en ce que**
le réservoir (20) pour additif liquide est pourvu de jauges (22, 23) de niveau pour le niveau haut et le niveau bas et **en ce que**,
pendant le fonctionnement du système, le niveau d'additif liquide dans le réservoir (20) est régulé de façon à ne pas dépasser sensiblement le niveau haut et à ne pas tomber sensiblement au-dessous du niveau bas.

4. Système de dosage selon l'une quelconque des revendications précédentes, **caractérisé**
**en ce qu'**une unité (24) de filtration de gaz est fixée à l'échappement (21) de gaz de telle sorte que le gaz d'échappement issu du réservoir (20) pour additif liquide traverse l'unité (24) de filtration avant d'atteindre l'atmosphère,
l'unité (24) de filtration de gaz comportant de préférence un piège (25) à charbon actif pour le gaz d'échappement et / ou l'unité (24) de filtration de gaz étant positionnée au-dessus ou, de préférence, à côté du réservoir (20) pour additif liquide.

5. Système de dosage selon l'une quelconque des revendications précédentes, **caractérisé en ce que**
l'alimentation (6) en additif liquide est positionnée au-dessous du réservoir (20) pour additif liquide et **en ce qu'**une pompe (27) d'alimentation est positionnée entre le réservoir (20) pour additif liquide et l'alimentation (6) en additif liquide, et **en ce que**,
pendant le fonctionnement du système, de l'additif liquide est pompé de l'alimentation (6) en additif liquide au réservoir (20) pour additif liquide, de préférence de façon discontinue suivant les indications des jauges (22, 23) de niveau,
la pompe (27) d'alimentation étant de préférence pourvue d'une vanne unidirectionnelle (30) de dérivation pour les gaz d'échappement issus de l'alimentation (6) en additif liquide.

6. Système de dosage selon l'une quelconque des revendications 1 à 4, **caractérisé en ce que**
l'alimentation (6) en additif liquide est positionnée au-dessus du réservoir (20) pour additif liquide, un élément (31) de régulation du débit étant positionné entre eux, et **en ce que**,
pendant le fonctionnement du système, de l'additif liquide est amené par gravité de l'alimentation (6) en additif liquide au réservoir (20) pour additif liquide, régulé par un élément (31) de régulation du débit,
l'alimentation (6) en additif liquide étant de préférence pourvue d'un échappement (32) de gaz permettant le dégazage de l'additif liquide présent dans l'alimentation (6) en additif liquide à travers l'échappement (32) de gaz, et une unité (33) de filtration de gaz étant fixée à l'échappement (32) de gaz de telle sorte que le gaz d'échappement issu de l'alimentation (6) en additif liquide traverse l'unité (33) de filtration avant d'atteindre l'atmosphère, l'unité (33) de filtration de gaz comportant en outre de préférence un piège (34) à charbon actif pour le gaz d'échappement.

7. Système de dosage selon l'une quelconque des revendications précédentes, **caractérisé**
**en ce qu'**il comprend
un deuxième raccord (35) d'additif liquide destiné à raccorder le système de dosage à une deuxième alimentation (36) en additif liquide,
une deuxième canalisation (37) d'alimentation en additif allant du deuxième raccord (35) d'additif liquide au point (9) de jonction ou à un deuxième point (40) de jonction,
une deuxième pompe (38) d'alimentation motorisée, positionnée sur la deuxième canalisation (37) d'alimentation en additif en amont du point (9) de jonction ou du deuxième point (40) de jonction,
un deuxième contrôleur de circulation ou un deuxième débitmètre (39) d'additif positionné sur la deuxième canalisation (37) d'alimentation en additif, de préférence en aval de la deuxième pompe (38) d'alimentation,
l'unité (17) de commande régulant, pendant le fonctionnement du système, le débit du premier et du deuxième additif liquide à la quantité nécessitée par les proportions de mélange des additifs et par le débit de l'eau en régulant le fonctionnement des pompes (18, 38) d'alimentation.

8. Système de dosage selon l'une quelconque des revendications précédentes, **caractérisé en ce que**
la pompe (18; 38) d'alimentation est une pompe foulante volumétrique, de préférence une pompe à piston, idéalement une pompe à piston à double effet, et / ou **en ce que**
l'échappement (21 ; 32) de gaz est pourvu d'un clapet d'échappement de gaz, de préférence un clapet anti-retour.

9. Système de dosage selon l'une quelconque des revendications précédentes, **caractérisé en ce que**
pendant l'utilisation, l'additif liquide est un désinfectant à dégazage,
l'additif liquide à dégazage étant de préférence un peroxoacide organique ou, en particulier, de l'acide peracétique, ou l'additif liquide à dégazage étant un composé peroxo inorganique ou, en particulier, un peroxyde d'hydrogène.

10. Système de dosage selon la revendication 7,
**caractérisé en ce que**
le deuxième additif liquide est un désinfectant ou un activateur pour désinfectant, de préférence une lessive de soude ou un liquide activateur à base de lessive de soude.

11. Utilisation d'un système de dosage selon l'une quelconque des revendications 1 à 10 pour le dosage d'un désinfectant selon l'une quelconque des revendications 9 et 10.
